# EUROPEAN PATENT SPECIFICATION

(11) **EP 1 004 178 B1**
(45) Date of publication and mention of the grant of the patent: **05.03.2003**
(21) Application number: 98938595.0
(22) Date of filing: 14.08.1998
(51) Int. Cl.: H04J 3/06, H04Q 11/04

(54) **A TELETRANSMISSION NETWORK, NETWORK ELEMENTS THEREFOR AND A METHOD OF IDENTIFYING THE SYNCHRONIZATION OF A NETWORK ELEMENT**
EIN FERNÜBERTRAGUNGSNETZWERK, NETZWERKELEMENTE HIERZU UND VERFAHREN ZUR IDENTIFIZIERUNG DER SYNCHRONISATION EINES NETZWERKELEMENTS
RESEAU DE TELETRANSMISSION, SES ELEMENTS, ET PROCEDE D'IDENTIFICATION DE LA SYNCHRONISATION D'UN ELEMENT DE RESEAU

(30) Priority: 14.08.1997 DK 93897
(43) Date of publication of application: 31.05.2000
(73) Proprietor: TELLABS DENMARK A/S, 2750 Ballerup (DK)
(72) Inventor: JACOBSEN, Michael, DK-2500 Valby (DK)
(74) Representative: Boesen, Johnny Peder
(86) International application number: DK9800351
(87) International publication number: WO99009686

(56) References cited:
- EP-A2- 0 715 428
- WO-A1-94/11963
- DE-A1- 4 408 760
- US-A- 5 579 513
- NTZ, Volume 46, No. 2, February 1993, (West Germany) R. KIEFER, "Messaufgaben an SDH-Ubertragungssystemen".

## Description

The invention relates to a teletransmission network comprising a plurality of network elements, each of which is adapted to emit and/or receive data signals, and of which one or more mray serve as a synchronization source for other network elements, the data rate of the signals emitted from the synchronization source being decisive for the data rate of the signals emitted from these other network elements. The invention moreover relates to network elements for such a teletransmission network and to a method of identifying whether a network element in a teletransmission network is synchronized to a given synchronization source and use of the method in an SDH system.

In synchronous data communication networks, e.g. SDH networks (Synchronous Digital Hierarchy), advanced control of the synchronization mechanisms takes place. This control is based on a synchronization hierarchy so that one of the nodes (network elements) in the network is selected as the primary reference for other nodes, which may in turn serve as a reference for other nodes. Normally, no clock signals proper are transmitted in the network. When a node is synchronized to a reference node, this therefore takes place by extracting a clock signal from the data signals received from the reference node, said clock signal being then used in the node concerned partly for internal control and partly for synchronization of the data signals emitted from the node.

Where several networks are interconnected, e.g. by interconnection of a plurality of national networks to establish a common international network, there will typically be several primary references. Several parallel synchronization hierarchies will thus be provided. In SDH terminology, this normally occurring interconnection is referred to as a pseudo-synchronous mode of the network.

Although the individual primary references are specified within quite narrow tolerances, the tolerances may cause significant differences in transmission rates, when data are to be transmitted between two networks synchronized to various primary references. This and other reasons may have as a result that nodes in a single or several networks lose their synchronization with the upper layers in the synchronization hierarchy. In SDH terminology this state of lost synchronization is referred to as a plesiochronous mode. In the plesiochronous mode, a node has selected its own internally generated synchronization to which network elements on a lower layer in the synchronization hierarchy may synchronize. This internally generated synchronization may be based on a free running clock signal, and the node is said to be in a free running mode. If the clock signal is based on the clock signal received last by the network element, the mode is called holdover.

Information on the set-up of the synchronization hierarchy, i.e. how the individual network elements are synchronized, will normally be known in a form of monitoring system (management system). If this information is not easily accessible, is lost or changes occur, e.g. if the whole or part of the network is in a plesiochronous mode, it will be expedient to be able to provide this information by performing measurements on the system. For example, it is conceivable that it is desired to check at one end of an SDH network that the synchronization comes from the right source at the other end of the country, and that a holdover or free-running mode has not been assumed somewhere en route.

It is known to check the synchronization state of a network element by using a so-called test set, which is a device that can be connected to a synchronization source, and which causes the data signals from the synchronization source to be transmitted in the network with a fixed offset value in frequency, and then it may be checked by means of another device, e.g. a frequency counter which is coupled to a given other network element, whether the signals received in this network element also have this offset value in frequency. If this is the case, the network element has been synchronized to the synchronization source concerned.

This, however, has the drawback that staff and equipment have to be sent out to the synchronization source as well as to the network element whose synchronization is to be measured, and this is therefore a very costly solution. In particular, it is inexpedient that the measurement cannot be activated or read from an overall management or monitoring system, but just locally by means of said equipment.

EP 715 428 discloses a network element in which information about the synchronization state of the network element is obtained by comparing the external clock signal and the internal clock signal. In this way it is possible to see whether the network is synchronized or not, but it is not possible to identify a specific synchronization source.

DE 44 08 760 describes a method in which a pointer value of data signals received in a network element is compared to the pointer value of data signals transmitted from the same network element. When the two pointer values match each other the network element is synchronized to the incoming data signals. Again, it is not possible to identify a specific synchronization source.

Accordingly, an object of the invention is to provide a teletransmission network of the type mentioned in the opening paragraph in which a specific synchronization source may be identified, and wherein the identification can be activated directly from an overall monitoring system.

This is achieved according to the invention in that one or more of the network elements capable of serving as a synchronization source are adapted to vary the data rate of the emitted signals by modulating a frequency corresponding to said data rate with a signal of low frequency with respect thereto, and that at least one of the other network elements comprises means for detecting whether the data rate of the received signals varies in the same manner as said variation of the signals emitted from the synchronization source.

When it is the synchronization source itself that can vary the data rate, a much simpler solution is achieved, capable of being controlled directly from a monitoring system and capable of being implemented whenever it is desired, without first having to send staff and equipment out to the individual network elements.

When at least one of the other network elements comprises means for detecting whether the data rate of the received signals varies in the same manner as said variation of the signals emitted from the synchronization source, it is ensured that the entire measurement can be controlled from the monitoring system, as this can vary the data rate from the synchronization source and also detect in the other network elements whether this variation can be found there.

When the network element or elements capable of varying the data rate are adapted to produce said variation by modulating a frequency corresponding to said data rate with a signal of low frequency with respect thereto, it is additionally ensured that it is possible to vary the frequency in a manner which does not build up a constantly increasing phase difference relative to other frequencies which are not subjected to a corresponding variation. That the variation is of low frequency moreover ensures that it may be transferred unobstructedly through the network to the network element whose synchronization conditions it is desired to check. A variation of higher frequency might be attenuated by low-pass filters in the network elements which are passed en route.

In an expedient embodiment, which is defined in claim 2, the network element or elements capable of varying the data rate are adapted to perform said variation under remote control from a monitoring system. Correspondingly, it is expedient that said means for detecting whether the data rate of the received signals varies in the same manner as said variation of the signals emitted from the synchronization source, are adapted to be remote-controlled and monitored from a monitoring system. This embodiment is defined in claim 3.

When, as stated in claim 4, the low-frequency signal is a pseudo random sequence, a variation is obtained, which ensures that no phase difference is built up on average, and which is easily recognized in the network element or elements in which the variation is measured, as these may be adapted to recognize precisely such a sequence.

The invention also relates to a network element for use in such a teletransmission network and adapted to operate as a synchronization source. As stated in claim 5, the network element is moreover adapted to vary the data rate of the emitted signals by modulating a frequency corresponding to said data rate with a signal of low frequency with respect thereto.

When it is the synchronization source itself that can vary the data rate, a simpler solution is achieved, as mentioned above, which can be controlled directly from a monitoring system, and which can be implemented whenever it is desired, without first having to send staff and equipment out to the individual network elements.

Claims 6 and 7 define expedient embodiments of this network element with the advantages described above.

The invention moreover relates to a network element for use in such a teletransmission network and adapted to be synchronized to signals which are received from a synchronization source via the network. As stated in claim 8, the network element moreover comprises means for detecting whether the data rate of the received signals varies in the same manner as said variation of the signals emitted from the synchronization source.

When the individual network elements themselves can detect a variation in the data rate, it is correspondingly ensured that the described measurements, with respect to detecting the synchronization source of a network element, can be performed directly, without having to mount special equipment in or at the network element.

Claims 9-11 define expedient embodiments of this network element with the advantages described above.

As mentioned, the invention also relates to a method of identifying whether a network element in a teletransmission network of the described type is synchronized to a given synchronization source. The method is described in claim 12. When the data rate of said signals from the synchronization source is varied by modulating a frequency corresponding to said data rate with a signal of low frequency with respect thereto, and it is checked in said network element whether the data rate of the received signals varies in the same manner and then, if this is the case, the network element is considered to be synchronized to said synchronization source, a much simpler solution is achieved, as described above, which can be controlled directly from a monitoring system, and which can be implemented whenever it is desired, without first having to send staff and equipment out to the individual network elements.

Claims 13 and 14 define expedient embodiments of the method with the advantages described above.

Finally, as stated in claims 15 and 16, the invention relates to a use of said method in an SDH system and a SONET system, respectively. The SDH system is extremely widespread, and the mentioned advantages will be particularly distinct in precisely an SDH system. SONET is a North American version of SDH.

The invention will now be described more fully below with reference to the drawing, in which
fig. 1 shows a synchronization hierarchy for a synchronous data communications network,
fig. 2 shows an example of how a network element in the synchronization hierarchy of fig. 1 can lose the synchronization,
fig. 3 shows two parallel synchronization hierarchies which are synchronized from their respective synchronization sources,
fig. 4 shows a transmitter which is adapted to transmit communications signals and modulate the data rate according to the invention,
fig. 5 shows an example of how a simple modulation signal may be designed, and
fig. 6 shows an example of a network element which is adapted to detect a modulation of the data rate.

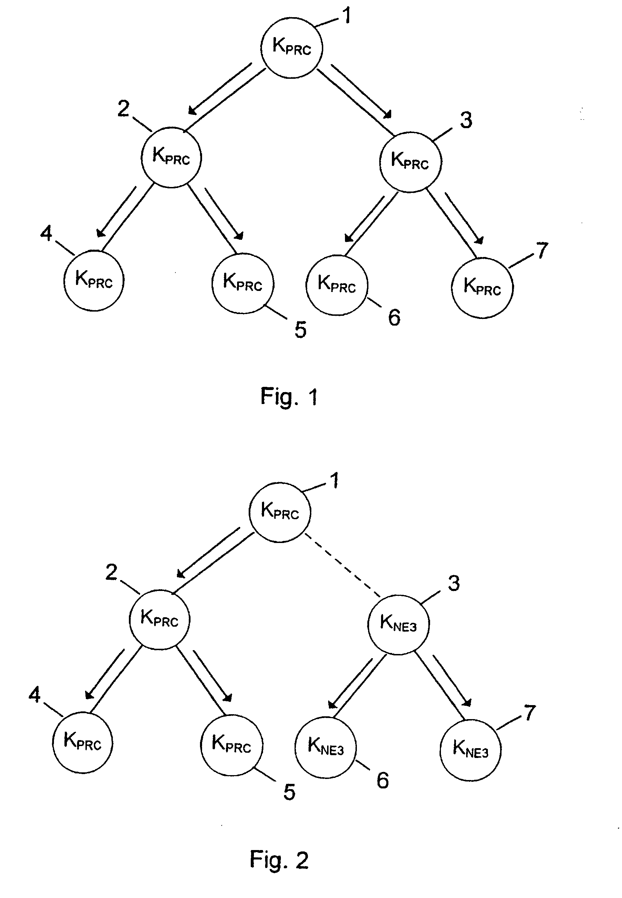

Fig. 1 shows an example of the structure of a synchronization hierarchy of a synchronous data communications network. The example involves an SDH network with a plurality of network elements, of which the seven elements 1-7 are shown in the figure. One of the network elements 1 is here selected as a primary reference, so that the clock signal (KPRC) from there is distributed down through the hierarchy to the other network elements 2-7. The network elements are illustrated as circles in which the synchronization source of the network element is indicated. Although the data flow in the communications network does not necessarily follow the same structure, it should be stressed that, in many situations, the clock signals are not distributed as clock signals proper, but can be extracted from the received data signals in the individual network elements. For example, the network element 1 transmits data with the clock frequency KPRC to the network element 2. This element can then regenerate KPRC on the basis of the received data and use it for the data which are transmitted to the network elements 4 and 5. It will thus be seen that in the example shown all the network elements are synchronized to the frequency KPRC which originates from the element 1. The arrows show how the synchronization is transferred between the network elements.

Fig. 2 shows the same network as in fig. 1, but in a situation where one of the network elements, in this case the element 3, has lost the synchronization to the primary reference KPRC, e.g. because of a drop-out of the connection between the elements 1 and 3, as is shown in dashed line. Then, the network element 3 instead uses a self-generated clock signal KNE3 for the data which it passes further on in the system, and the network elements 6 and 7 further down in the hierarchy will therefore be synchronized to this clock signal instead of to the signal KPRC like before. In SDH terminology, the lost synchronization means that the network element 3 assumes a free running or holdover mode in dependence on whether its internal clock signal is entirely free running, or whether it was locked to the primary clock signal immediately before the drop-out of the latter. The mode in fig. 2 is also called a plesiochronous mode. If a network element loses the synchronization to a primary synchronization source KPRC, then it will not be readily possible in the network elements synchronized to this network element to detect the source to which the synchronization was actually made. Thus, there is a need for a facility allowing it to be detected in a simple manner, e.g. from a monitoring system, whether a given network element is synchronized to KPRC or to another clock signal, such as e.g. KNE3. This is made possible with the invention.

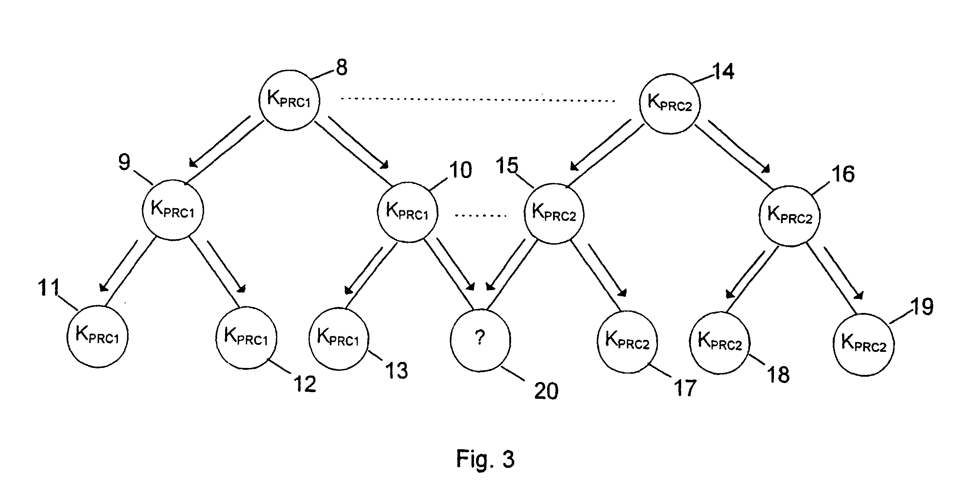

Fig. 3 shows an example where several networks are interconnected so that one or more network elements are connected to both networks. It may e.g. be a plurality of national networks which are interconnected to establish a common international network, and which will typically have a primary reference each. In the example, the network elements 8 and 14 are primary references and distribute the clock signals KPRC1 and KPRC2 in the two networks. It appears that the network elements 9-13 are synchronized to KPRC1, while the network elements 15-19 are synchronized to KPRC2. The network element 20, however, is connected to both networks, and it is thus uncertain whether it is synchronized to KPRC1 or KPRC2, as it receives both signals. Thus, there is a need for a facility allowing it to be detected in a simple manner, e.g. from a monitoring system, whether the network element 20 is synchronized to KPRC1 or KPRC2. This need, too, may be satisfied by the invention.

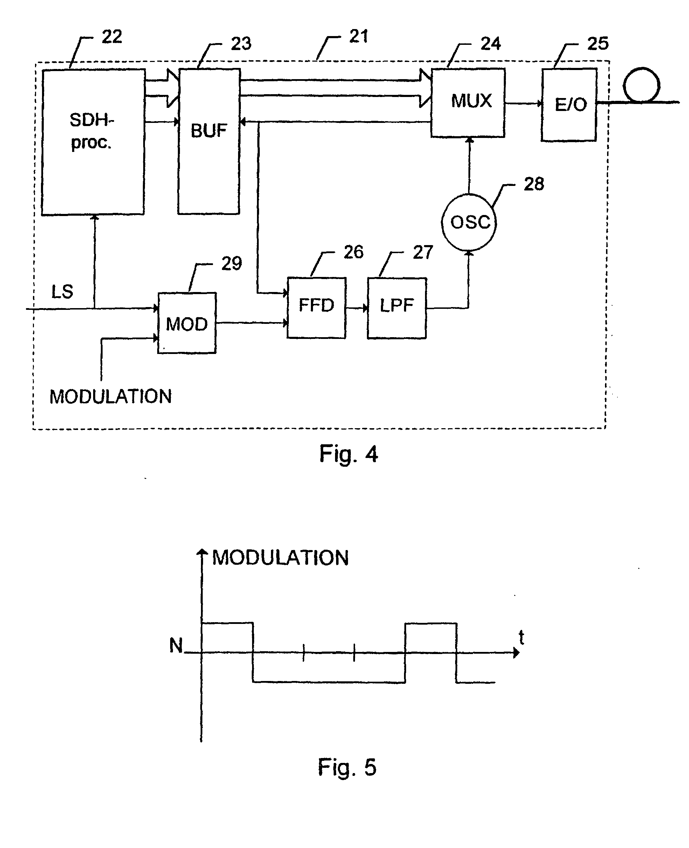

Fig. 4 shows a network element 21 which is adapted to transmit ordinary communications signals with a frequency which is superposed by an easily recognizable signal according to the invention. This network element therefore lends itself for use as a synchronization source according to the invention. The idea is that this superposed signal is applied when it is desired to detect whether a given other network element is synchronized to this synchronization source. When the frequency is modulated, it is simultaneously checked in the given other network element whether the clock signal received or regenerated there is modulated with the same signal. If this is the case, it is known that synchronization has been established to this synchronization source.

Fig. 4 shows how more or less advanced processing of data is performed in a known manner in such a network element 21, which causes the data having been subjected to processing to arrive in an irregular stream. It is thus well-known to have a buffer 23 interposed between a processing unit 22 and an output module 25, which may e.g. be in the form of an electrical/optical converter. Outputting of data from the buffer 23 is controlled by phase-locked loop. This phase-locked loop consists of a phase/frequency detector 26, which measures the difference between a local synchronization clock and an output clock signal to the buffer 23. The output signal from the phase/frequency detector 26 is filtered in the filter 27, and the filtered signal controls - in the form of a control signal - the frequency of the oscillator 28. This frequency controls the transmitted data in the multiplexer 24. This results in a jitter-free data rate our of the network element 21. This is prior art.

The above-mentioned modulation of the clock frequency may be performed e.g. by means of a modulator 29 which is inserted in the connection between a local synchronization clock LS and the phase/frequency detector 26. The modulator is controlled by the signal MODULATION, which is selected so that it is easily recognizable in other network elements, and so that it does not cause an increasing phase difference relative to the unmodulated clock signal. The signal MODULATION may e.g. be a pseudo random sequence, which is also called a PRBS (Pseudo Random Bit Sequence) signal, since this frequency is simple to detect and is frequently implemented beforehand in the transmission equipment for use for other test purposes.

The activation of the signal MODULATION may be controlled from an overall control and monitoring system, which can thereby connect the signal in a situation where it is desired to check the synchronization state of a network element further down in the synchronization hierarchy. It will thus not be connected in normal operation.

The ability to suppress fluctuations in the data rate caused by the internal processing functions of the network element depends primarily on the size of the buffer 23 and the band width of the loop. The band width of the phase-locked loop is determined so that it suppresses rapid variations in the data flow, and so that it allows relatively small and slow variations in the data flow to pass out of the transmitter. This means that precisely the small and slow variations caused by the PRBS sequence will escape through the filter 27, thereby producing a corresponding variation in the frequency of the oscillator 28. The frequency of the transmitted data, i.e. the data rate, will therefore have a corresponding variation which can be detected in another network element receiving these data. Owing to the corresponding low-pass filters in the other network elements which the signal has to pass en route in the network, the frequency of the modulation will normally be below 5 Hz. It should be noted that frequency deviations caused by the modulation are so small that the specifications of the SDH system are still observed.

Fig. 5 shows an example of how the signal MODULATION may modulate the local synchronization signal LS around its nominal frequency N. The modulation depth depends on the requirements made with respect to the data rate stability of the signal which is transmitted by the network element. The length of the period during which the modulated local synchronization signal is either greater or smaller than the nominal frequency of LS may be adjusted so that the equipment to detect the control and monitoring signals can detect them correctly. Furthermore, the size of the buffer 23 must be adjusted to the deviation from the nominal frequency as well as the mentioned period during which the frequency of the modulated local synchronization signal is either greater or smaller than the nominal frequency of LS. The signal shown in the figure may e.g. be the beginning of a PRBS sequence. This sequence is arranged such that the frequency of the modulated signal will on average be equally much above and below the nominal frequency so that the average data rate is not changed.

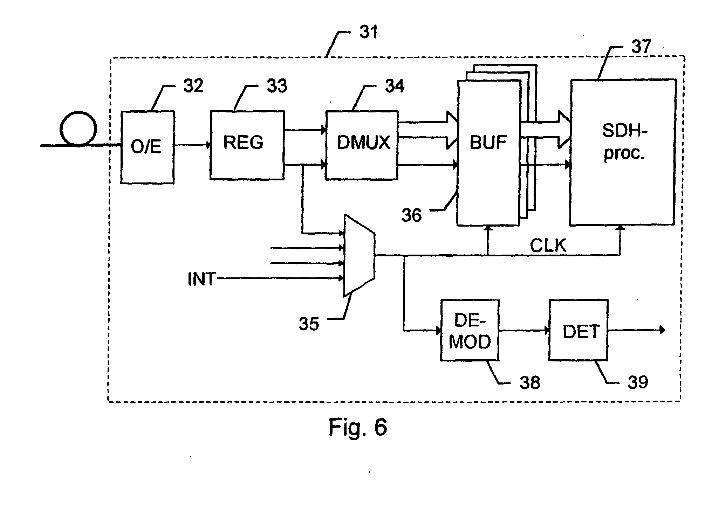

Fig. 6 shows a portion of the receiver part of a network element 31 which is capable of receiving data signals and of detecting whether a variation occurs, as described above, in the data rate of the signals received. Most of the figure shows a known receiver circuit in the same manner as fig. 4. The input module 32 receives optical signals from a fibre and converts them into corresponding electrical signals which are fed further on to the clock regeneration circuit 33. Here, a clock signal is extracted from the received data signals. The extracted clock signal is transmitted to a selector circuit 35, which will be mentioned more fully below, while the data signals are transmitted to the demultiplexer 34. The demultiplexed data are placed in the buffer 36, from which they may be transferred to the processing unit 37 at the rate at which this unit can receive them.

Two additional buffers are shown behind the buffer 36. The additional buffers symbolize that the network element can receive data signals from several lines which have an input circuit each. Thus, a clock signal may be extracted from each line, as these are not necessarily synchronized to the same synchronization source, and each of these clock signals is therefore fed to the selector 35 which selects the input to which the network element is to be synchronized. If no incoming data signals are received, an internally generated clock signal INT may be selected instead, which means that the network element is in free running or holdover mode. The selected clock signal as the signal CLK is then fed to the buffer 36 and the processing unit 37, and it is this clock signal which controls the data rate of the data which are transmitted further out in the network from this network element.

The clock signal CLK, which is fed from the selector 35 to the buffer 36 and the processing unit 37, is moreover fed to a demodulator circuit 38 which is adapted to demodulate the low-frequency variation in the clock signal CLK described above. The actual demodulation may take place in a known manner, e.g. by means of inter alia a low-pass filter. If the network element is synchronized to a synchronization source where the data rate is momentarily modulated as shown in fig. 4, a signal corresponding completely to the signal MODULATION in fig. 4 will occur on the output of the demodulator circuit 38. This signal is fed further on to a likewise well-known detector circuit 39 for the mentioned PRBS sequence. A logical signal indicating whether the PRBS sequence is present or not will occur on the output of the decector circuit. This signal may be used locally in the network element, or it may fed further on to the overall monitoring system. In the latter case, the synchronization state of the network element may thus be monitored directly from the monitoring system.

If the modulation of the data rate is both activated and detected from a control and monitoring system, the synchronization hierarchy of a network may be determined from a central position in spite of the fact that certain network elements are in a mode which is not immediately known by the control and monitoring system, e.g. holdover or free running mode of an SDH system.

Although a preferred embodiment of the present invention has been described and shown, the invention is not restricted to it, but may also be embodied in other ways within the scope of the subject-matter defined in the following claims.

## Claims

1. A teletransmission network comprising a plurality of network elements (1-7; 8-20), each of which is adapted to emit and/or receive data signals, and of which one or more of the network elements (21) may serve as a synchronization source for other network elements (31), the data rate of the signals emitted from the synchronization source being decisive for the data rate of the signals emitted from these other network elements, **characterized in that** one or more of the network elements (21) capable of serving as a synchronization source are adapted to vary the data rate of the emitted signals by modulating a frequency corresponding to said data rate with a signal of low frequency with respect thereto and that at least one of the other network elements (31) comprises means (38, 39) for detecting whether the data rate of the received signals varies in the same manner as said variation of the signals emitted from the synchronization source.

2. A teletransmission network according to claim 1, **characterized in that** the network element or elements (21) capable of varying the data rate are adapted to perform said variation under remote control from a monitoring system.

3. A teletransmission network according to claim 1 or 2, **characterized in that** said means (38, 39) for detecting whether the date rate of the received signals varies in the same manner as said variation of the signals emitted from the synchronization source, are adapted to be remote-controlled and/or monitored from a monitoring system.

4. A teletransmission network according to claims 1-3, **characterized in that** the low-frequency signal is a pseudo random sequence.

5. A network element (21) for use as a synchronization source in a teletransmission network according to claim 1 and adapted to serve as a synchronization source for other network elements (31) in the network, the data rate of the signals emitted from the synchronization source being decisive for the data rate of the signals emitted from these other network elements, **characterized in that** it is moreover adapted to vary the data rate of the emitted signals by modulating a frequency corresponding to said data rate with a signal of low frequency with respect thereto.

6. A network element according to claim 5, **characterized in that** it is adapted to perform said variation under remote-control from a monitoring system.

7. A network element according to claim 5 or 6, **characterized in that** the signal of low frequency is a pseudo random sequence.

8. A network element (31) for use in a teletransmission network according to claim 1 and adapted to be synchronized to signals received from a synchronization source via the network, **characterized in that** it comprises means (38, 39) for detecting whether the data rate of the received signals varies in the same manner as said variation of the signals emitted from the synchronization source.

9. A network element according to claim 8, **characterized in that** said detecting means (38, 39) are adapted to detect whether the data rate of the received signals is modulated with a signal of low frequency with respect thereto.

10. A network element according to claim 8 or 9, **characterized in that** said detecting means (38, 39) are adapted to be remote-controlled and/or monitored from a monitoring system.

11. A network element according to claims 8-10, **characterized in that** said detecting means (38, 39) are adapted to detect whether the data rate of the received signals is modulated with a pseudo random sequence.

12. A method of identifying whether a network element (31) in a teletransmission network is synchronized to a given synchronization source so that the data rate of the signals emitted from the synchronization source is decisive for the data rate of the signals emitted from the network element,
**characterized by**
• varying the data rate of said signals from the synchronization source by modulating a frequency corresponding to said data rate with a signal of low frequency with respect thereto,
• checking in said network element (31) whether the data rate of the received signals varies in the same manner as said variation of the signals emitted from the synchronization source,
• and, if so, considering the network element (31) to be synchronized to said synchronization source.

13. A method according to claim 12, **characterized in that** said process takes place remote-controlled and monitored from a monitoring system.

14. A method according to claim 12 or 13, **characterized in that** the low-frequency signal is a pseudo random sequence.

15. Use of the method according to claims 12-14 in an SDH system.

16. Use of the method according to claims 12-14 in a SONET system:

## Patentansprüche

1. Fernübertragungsnetzwerk, umfassend eine Mehrzahl von Netzwerkelementen (1-7; 8-20), von denen jedes so angepasst ist, dass es Datensignale aussendet und/oder empfängt und von denen eines oder mehrere der Netzwerkelemente (21) als Synchronisationsquelle für andere Netzwerkelemente (31) dienen können, wobei die Datenrate der von der Synchronisationsquelle ausgesandten Signale für die Datenrate der Signale bestimmend ist, die von diesen anderen Netzwerkelementen ausgesandt werden, **dadurch gekennzeichnet, dass** eines oder mehrere der Netzwerkelemente (21), die als Synchronisationsquelle dienen können, so angepasst sind, dass sie die Datenrate der ausgesandten Signale variieren, indem sie eine Frequenz, die der Datenrate entspricht, mit einem Signal von niedriger Frequenz in Bezug dazu modulieren, und dass mindestens eines der anderen Netzwerkelemente (31) Einrichtungen (38, 39) umfasst, um zu detektieren, ob die Datenrate der empfangenen Signale auf dieselbe Weise wie die Variation der von der Synchronisationsquelle ausgesandten Signale variiert.

2. Fernübertragungsnetzwerk nach Anspruch 1, **dadurch gekennzeichnet, dass** das Netzwerkelement oder -elemente (21), die die Datenrate variieren können, so angepasst sind, dass sie die Variation unter Fernsteuerung von einem Überwachungssystem ausführen.

3. Fernübertragungsnetzwerk nach Anspruch 1 oder 2, **dadurch gekennzeichnet, dass** die Einrichtungen (38, 39), um zu detektieren, ob die Datenrate der empfangenen Signale auf dieselbe Weise wie die Variation der von der Synchronisationsquelle ausgesandten Signale variiert, so angepasst sind, dass sie von einem Überwachungssystem ferngesteuert und/oder überwacht werden.

4. Fernübertragungsnetzwerk nach den Ansprüchen 1-3, **dadurch gekennzeichnet, dass** das Niedrigfrequenzsignal eine Pseudozufallsfolge ist.

5. Netzwerkelement (21) zur Verwendung als Synchronisationsquelle in einem Fernübertragungsnetzwerk nach Anspruch 1 und so angepasst, dass es als Synchronisationsquelle für andere Netzwerkelemente (31) in dem Netzwerk dient, wobei die Datenrate der von der Synchronisationsquelle ausgesandten Signale für die Datenrate der von diesen anderen Netzwerkelementen ausgesandten Signale bestimmend ist, **dadurch gekennzeichnet, dass** es außerdem so angepasst ist, dass es die Datenrate der ausgesandten Signale variiert, indem es eine Frequenz, die der Datenrate entspricht, mit einem Signal von niedriger Frequenz in Bezug dazu moduliert.

6. Netzwerkelement nach Anspruch 5, **dadurch gekennzeichnet, dass** es so angepasst ist, dass es die Variation unter Fernsteuerung von einem Überwachungssystem ausführt.

7. Netzwerkelement nach Anspruch 5 oder 6, **dadurch gekennzeichnet, dass** das Signal von niedriger Frequenz eine Pseudozufallsfolge ist.

8. Netzwerkelement (31) zur Verwendung in einem Fernübertragungsnetzwerk nach Anspruch 1 und so angepasst, dass es auf Signale synchronisiert ist, die von einer Synchronisationsquelle über das Netzwerk empfangen werden, **dadurch gekennzeichnet, dass** es Einrichtungen (38, 39) umfasst, um zu detektieren, ob die Datenrate der empfangenen Signale auf dieselbe Weise wie die Variation dervon der Synchronisationsquelle ausgesandten Signale variiert.

9. Netzwerkelement nach Anspruch 8, **dadurch gekennzeichnet, dass** die Detektionseinrichtungen (38, 39) so angepasst sind, dass sie detektieren, ob die Datenrate der empfangenen Signalen mit einem Signal von niedriger Frequenz in Bezug dazu moduliert ist.

10. Netzwerkelement nach Anspruch 8 oder 9, **dadurch gekennzeichnet, dass** die Detektionseinrichtungen (38, 39) so angepasst sind, dass sie von einem Überwachungssystem ferngesteuert und/oder überwacht werden.

11. Netzwerkelement nach den Ansprüchen 8-10, **dadurch gekennzeichnet, dass** die Detektionseinrichtungen (38, 39) so angepasst sind, dass sie detektieren, ob die Datenrate der empfangenen Signale mit einer Pseudozufallsfolge moduliert ist.

12. Verfahren zum Identifizieren, ob ein Netzwerkelement (31) in einem Fernübertragungsnetzwerk auf eine gegebene Synchronisationsquelle synchronisiert ist, so dass die Datenrate der von der Synchronisationsquelle ausgesandten Signale für die Datenrate der von dem Netzwerkelement ausgesandten Signale bestimmend ist, **gekennzeichnet durch**
• Variieren der Datenrate der Signale von der Synchronisationsquelle, indem eine Frequenz, die der Datenrate entspricht, mit einem Signal von niedriger Frequenz in Bezug dazu moduliert wird,
• Überprüfen in dem Netzwerkelement (31), ob die Datenrate der empfangenen Signale auf dieselbe Weise wie die Variation der von der Synchronisationsquelle ausgesandten Signale variiert
• und, wenn ja, In-Betracht-Ziehen, dass das Netzwerkelements (31) auf die Synchronisationsquelle synchronisiert ist.

13. Verfahren nach Anspruch 12, **dadurch gekennzeichnet, dass** der Prozess von einem Überwachungssystem ferngesteuert und überwacht stattfindet.

14. Verfahren nach Anspruch 12 oder 13, **dadurch gekennzeichnet, dass** das Niedrigfrequenzsignal eine Pseudozufallsfolge ist.

15. Verwendung des Verfahrens nach den Ansprüchen 12-14 in einem SDH-System.

16. Verwendung des Verfahrens nach den Ansprüchen 12-14 in einem SONET-System.

## Revendications

1. Réseau de télétransmission comprenant une pluralité d'éléments de réseau (1 à 7 ; 8 à 20), chacun d'eux étant adapté à émettre et / ou à recevoir des signaux de données et dont un ou plusieurs de ces éléments de réseau (21) peut servir de source de synchronisation pour d'autres éléments de réseau (31), le débit de données des signaux émis depuis la source de synchronisation étant déterminant pour le débit de données des signaux émis depuis ces autres éléments de réseau, **caractérisé en ce qu**'un ou plusieurs des éléments de réseau (21), capables de servir de source de synchronisation, sont adaptés à faire varier le débit de données des signaux émis en modulant une fréquence, correspondant audit débit de données, par un signal d'une fréquence basse par rapport à celui-ci, et en ce qu'au moins un des autres éléments de réseau (31) comprend des moyens (38, 39) pour détecter si le débit de données des signaux reçus varie de la même manière que ladite variation des signaux émis depuis la source de synchronisation.

2. Réseau de télétransmission selon la revendication 1, **caractérisé en ce que** l'élément ou les éléments (21) de réseau, capables de faire varier le débit de données, sont adaptés à effectuer ladite variation par une commande à distance depuis un système de surveillance.

3. Réseau de télétransmission selon la revendication 1 ou 2, **caractérisé en ce que** lesdits moyens (38, 39), pour détecter si le débit de données des signaux reçus varie de le même manière que ladite variation des signaux émis depuis la source de synchronisation, sont adaptés à être commandés à distance et / ou surveillés depuis un système de surveillance.

4. Réseau de télétransmission selon les revendications 1 à 3, **caractérisé en ce que** le signal de basse fréquence est une séquence pseudo-aléatoire.

5. Elément de réseau (21) destiné à étre utilisé en tant que source de synchronisation dans un réseau de télétransmission selon la revendication 1 et adapté à servir de source de synchronisation pour d'autres éléments de réseau (31) dans le réseau, le débit de données des signaux émis depuis la source de synchronisation étant déterminant pour le débit de données des signaux émis depuis ces autres éléments de réseau, **caractérisé en ce qu**'il est, en outre, adapté à faire varier le débit de données des signaux émis, en modulant une fréquence, correspondant audit débit de données, par un signal d'une fréquence basse par rapport à celui-ci.

6. Elément de réseau selon la revendication 5 **caractérisé en ce qu'**il est adapté à effectuer ladite variation par une commande à distance depuis un système de surveillance.

7. Elément de réseau selon la revendication 5 ou 6, **caractérisé en ce que** le signal de basse fréquence est une séquence pseudo-aléatoire.

8. Élément de réseau (31) destiné à être utilisé dans un réseau de télétransmission selon la revendication 1 et adapté à être synchronisé à des signaux reçus depuis une source de synchronisation par l'intermédiaire du réseau, **caractérisé en ce qu**'il comprend des moyens (38, 39) pour détester si le débit de données des signaux reçus varie de la même manière que ladite variation des signaux émis depuis la source de synchronisation.

9. Elément de réseau selon la revendication 8, **caractérisé en ce que** lesdits moyens de détection (38, 39) sont adaptés à détecter si le débit de données des signaux reçus est modulé par un signal de basse fréquence par rapport à celui-ci.

10. Elément de réseau selon la revendication 8 ou 9, **caractérisé en ce que** lesdits moyens de détection (38, 39) sont adaptés à être commandés à distance et / ou surveiller depuis un système de surveillance.

11. Elément de réseau selon les revendications 8 à 10, **caractérisé en ce que** lesdits moyens de détection (38, 39) sont adaptés à détecter si le débit de données des signaux reçus est modulé par une séquence pseudo-aléatoire.

12. Procédé d'identification du fait qu'un élément de réseau (31), dans un réseau de télétransmission, est synchronisé avec une source de synchronisation donnée, afin que le débit de données des signaux émis depuis la source de synchronisation soit déterminant pour le débit de données des signaux émis depuis l'élément de réseau,
**caractérisé en ce qu**'il consiste à :
- faire varier le débit de données desdits signaux provenant de la source de synchronisation en modulant une fréquence, correspondant audit débit de données, par un signal d'une fréquence basse par rapport à celui-ci ;
- vérifier dans ledit élément de réseau (31) si le débit de données des signaux reçus varie de la même manière que ladite variation des signaux émis depuis la source de synchronisation ; et,
- si tel est le cas, considérer l'élément de réseau (31) comme étant synchronisé avec ladite source de synchronisation.

13. Procédé selon la revendication 12, **caractérisé en ce que** ledit procédé est mis en oeuvre de manière commandée à distance et surveillée depuis un système de surveillance.

14. Procédé selon la revendication 12 ou 13, **caractérisé en ce que** le signal de basse fréquence est une séquence pseudo-aléatoire.

15. Utilisation du procédé selon les revendications 12 à 14 dans un système SDH (hiérarchie numérique synchrone).

16. Utilisation du procédé selon les revendications 12 à 14 dans un système SONET (réseau optique synchrone).
